# DEMANDE DE BREVET EUROPEEN

(11) **EP 0 775 997 A1**
(43) Date de publication de la demande: **28.05.1997**
(21) Numéro de dépôt: 96402491.3
(22) Date de dépôt: 20.11.1996
(51) Int. Cl.: G11B 5/31

(54) **Procédé de réalisation d'une tête magnétique planaire et tête obtenue par ce procédé**

(30) Priorité: 22.11.1995 FR 9513854
(71) Demandeur: COMMISSARIAT A L'ENERGIE ATOMIQUE, 75015 Paris (FR); SILMAG, 38524 Saint-Egrève Cedex (FR)
(72) Inventeur: Dutertre, Pierre, 38210 La Rivière (FR); Lazzari, Jean-Pierre, 38700 Corenc (FR)
(74) Mandataire: Dubois-Chabert, Guy

(57) **Abrégé**

Procédé de réalisation d'une tête magnétique planaire et tête magnétique obtenue par ce procédé.

Une couche de protection (44) dure encadre les pièces polaires. L'espaceur amagnétique (22) ainsi que les pièces polaires (23,24) affleurent au niveau de cette couche de protection. De préférence, cette couche est en carbone de type diamant.

Application à l'enregistrement magnétique.

## Description

### Domaine technique

La présente invention a pour objet un procédé de réalisation d'une tête magnétique planaire et une tête magnétique obtenue par ce procédé.

Elle trouve une application dans l'enregistrement magnétique, que ce soit sur bande, sur disque rigide ou sur tout autre support.

### Etat de la technique antérieure

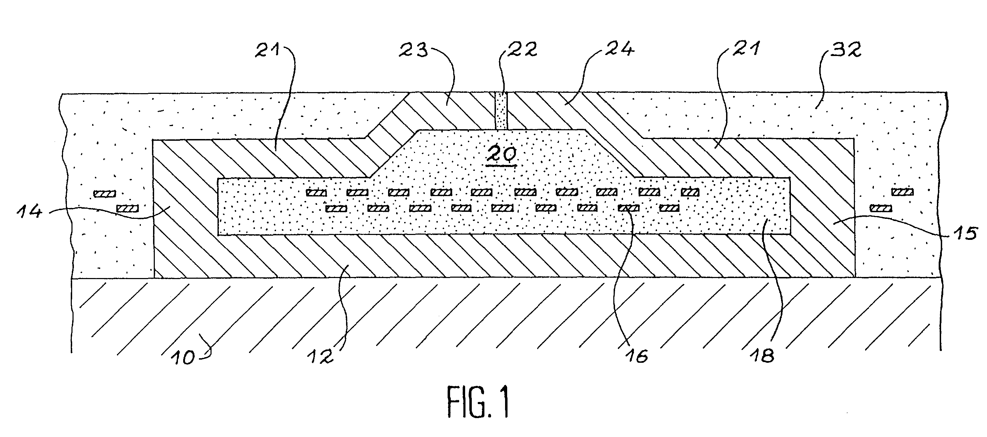

La figure 1 annexée montre, en coupe, une tête magnétique horizontale connue telle que décrite par exemple dans le document EP-A-0 262 028.

La tête représentée comprend un substrat 10, une première couche magnétique 12, deux plots ou piliers magnétiques 14, 15 reposant aux deux extrémités de la première couche magnétique 12, un bobinage conducteur 16 situé dans une couche isolante 18 et entourant les deux plots 14, 15, un relief ou pion ou ilôt isolant 20 disposé au-dessus de la partie centrale du bobinage, une deuxième couche magnétique 21 de part et d'autre du relief isolant 20, deux pièces polaires 23, 24 séparées par un espaceur amagnétique 22, et une couche isolante de protection 32.

Pour réaliser une telle tête, on s'y prend en général comme suit :
- sur le substrat, on dépose la première couche magnétique,
- on dépose ensuite la couche isolante,
- dans cette couche isolante, on forme les deux plots magnétiques et l'enroulement conducteur,
- on forme ensuite le relief isolant au-dessus de la couche isolante,
- on réalise la seconde couche magnétique de part et d'autre du relief isolant et en contact avec les plots magnétiques,
- sur le sommet du relief isolant, on forme un espaceur amagnétique,
- on dépose sur le relief central isolant et par dessus l'espaceur amagnétique une couche magnétique supérieure,
- on recouvre la couche magnétique supérieure d'une couche isolante,
- on planarise l'ensemble jusqu'à faire affleurer l'espaceur et les pièces polaires.

Le document cité décrit plus en détail ces différentes étapes du procédé.

Pour éviter l'usure d'une telle tête et les conséquences néfastes que cette usure entraînerait (comme la création de particules qui peuvent détériorer la tête et/ou le support d'enregistrement), il a été proposé de recouvrir la tête d'une couche mince d'un matériau très dur comme le carbone de type diamant (en terminologie anglosaxonne : "Diamont Like Carbon" ou DLC). Cette couche, d'épaisseur de l'ordre de 10 nm, est généralement déposée par pulvérisation cathodique. Elle réduit les phénomènes de frottement et assure une grande durée de vie à la tête. Cependant, cette solution présente un inconvénient. En effet, elle écarte la tête du support d'enregistrement et, de ce fait, augmente les pertes et réduit la sensibilité de la tête.

### Exposé de l'invention

La présente invention a justement pour but de remédier à cet inconvénient. A cette fin, l'invention propose un procédé de réalisation d'une tête magnétique dans lequel la couche dure de protection se trouve au niveau du sommet de l'espaceur amagnétique et non plus au-dessus de l'espaceur. Cette couche joue donc encore son rôle de protection contre l'usure mais sans augmenter l'écart entre la tête et le support d'enregistrement.

De façon précise, l'invention a donc pour objet un procédé de réalisation d'une tête magnétique de type planaire, comprenant d'abord un certain nombre d'opérations connues dans l'état de la technique :
- sur un substrat on dépose une première couche magnétique,
- on dépose ensuite une couche isolante sur l'ensemble,
- dans cette couche isolante, on forme deux plots magnétiques en contact avec la première couche magnétique et un enroulement conducteur,
- on forme un relief isolant au-dessus de la couche isolante,
- on réalise une seconde couche magnétique de part et d'autre du relief isolant et en contact avec les plots magnétiques,
- sur le sommet du relief isolant on forme un espaceur amagnétique,
- on dépose sur le relief central isolant et par dessus l'espaceur amagnétique une couche magnétique supérieure,
- on recouvre la couche magnétique supérieure d'une couche isolante.

Le procédé de l'invention est caractérisé par le fait qu'il se poursuit par les opérations suivantes :
- on planarise la couche magnétique supérieure et la couche isolante sans aller jusqu'à faire affleurer l'espaceur amagnétique,
- on grave la couche isolante jusqu'à abaisser sa surface sous le niveau du sommet de l'espaceur amagnétique,
- on dépose une couche de protection en matériau dur sur l'ensemble,
- on planarise la couche magnétique supérieure en prenant comme surface de référence la couche de protection jusqu'à mettre les pièces polaires et le sommet de l'espaceur au niveau de la couche de protection.

La présente invention a encore pour objet une tête magnétique planaire obtenue par le procédé qui vient d'être défini. La tête planaire de l'invention comprend d'abord un certain nombre de moyens connus comme un substrat, une première couche magnétique, deux plots magnétiques, une couche isolante surmontée d'un relief isolant, une seconde couche magnétique de part et d'autre du relief isolant, un espaceur amagnétique situé sur le relief isolant, deux pièces polaires de part et d'autre de l'espaceur amagnétique et une couche isolante encadrant les pièces polaires. La tête magnétique de l'invention est caractérisée par le fait que la couche isolante encadrant les pièces polaires présente une surface située sous le niveau du sommet de l'espaceur ; la tête comprend en outre une couche de protection en matériau dur recouvrant la couche isolante ; les pièces polaires et le sommet de l'espaceur amagnétique affleurent au niveau de la couche de protection en matériau dur.

Dans l'invention, la couche mince de protection est de préférence en carbone de type diamant. L'épaisseur de cette couche est de préférence comprise entre 10 et 20 nm.

Selon un mode de réalisation avantageux, la tête comprend en outre, entre la couche isolante et la couche de protection, une couche mince d'adhérence. De préférence, cette couche mince d'adhérence est en un matériau pris dans le groupe constitué par le tungstène, le chrome et le titane-tungstène. Son épaisseur est de préférence comprise entre 50 et 500 nm.

### Brève description des dessins

- la figure 1, déjà décrite, montre, en coupe, une tête planaire connue ;
- la figure 2 montre une première étape de réalisation d'une tête selon le procédé de l'invention ;
- la figure 3 montre, en coupe, un détail de la partie supérieure de la tête ;
- la figure 4 est une coupe le long de l'axe longitudinal de l'un des rails d'un patin de vol ;
- la figure 5 montre une étape supplémentaire du procédé de dépôt d'une couche d'adhérence et de blindage ;
- la figure 6 montre encore une étape supplémentaire du procédé de dépôt d'une couche de protection dure ;
- la figure 7 montre le résultat de la planarisation de la tête ;
- la figure 8, enfin, est une vue en perspective montrant la partie arrière d'un patin de vol de type catamaran avec une tête magnétique sur l'un des rails et avec un décrochement périphérique assurant la prise de contact sur le substrat.

### Exposé détaillé de modes de réalisation

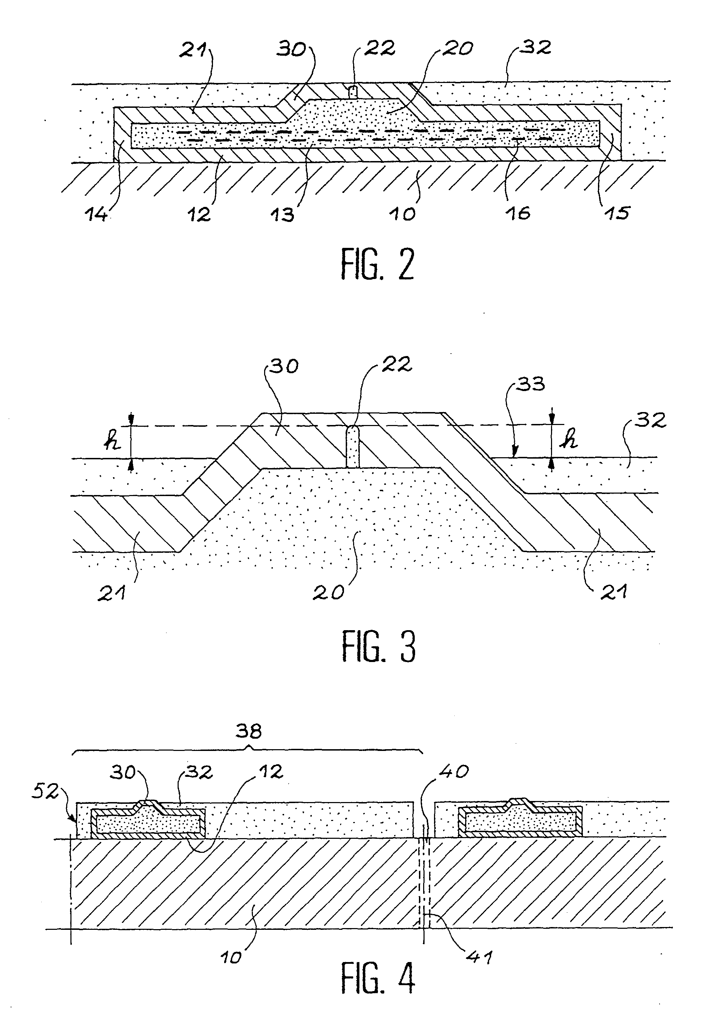

La figure 2 représente, en coupe, un sous-ensemble obtenu après la mise en oeuvre d'opérations connues déjà décrites. Ce sous-ensemble comprend, sur un substrat 10, une couche magnétique inférieure 12, deux plots ou piliers magnétiques 14 et 15, un enroulement conducteur 16, un relief central trapézoïdal 20, une couche magnétique 21 de part et d'autre du relief. Le relief central est surmonté d'un espaceur amagnétique 22 entouré d'une couche magnétique supérieure 30. Une couche de protection ordinaire 32 encadre la partie centrale.

Ce sous-ensemble a fait l'objet d'un début de planarisation qui a permis de mettre à niveau la couche magnétique supérieure 30 et la couche isolante 32. Mais cette planarisation a été interrompue avant que le sommet de l'espaceur 22 n'affleure à la surface de la couche magnétique. Autrement dit, l'entrefer n'est pas encore ouvert. L'espaceur 22 est encore enterré dans la couche magnétique 30.

Dans une deuxième étape illustrée sur la figure 3, on grave l'isolant 32, par exemple par gravure ionique réactive. Cette gravure n'affecte pas la couche magnétique 30. La profondeur de gravure est telle que le plan 33 de la couche isolante 32 passe sous le niveau du sommet de l'espaceur 22. L'écart entre le sommet de l'espaceur et le plan de la couche isolante gravée est noté h sur la figure 3. La profondeur de gravure de l'isolant peut être comprise entre 0,1 µm et quelques microns. L'isolant 32 peut être de la silice (SiO₂).

Une tête magnétique n'est en général pas réalisée de manière individuelle et isolée. Elle est obtenue avec son patin de vol avec d'autres têtes, de manière collective. Dans ce cas, le substrat supporte un grand nombre de patins, chacun avec une ou plusieurs têtes. La figure 4 montre ainsi un substrat 10 et un patin de vol 38 en coupe longidutinale selon l'un de ses rails 52, en l'occurrence celui qui porte la tête. Celle-ci est à l'arrière du rail.

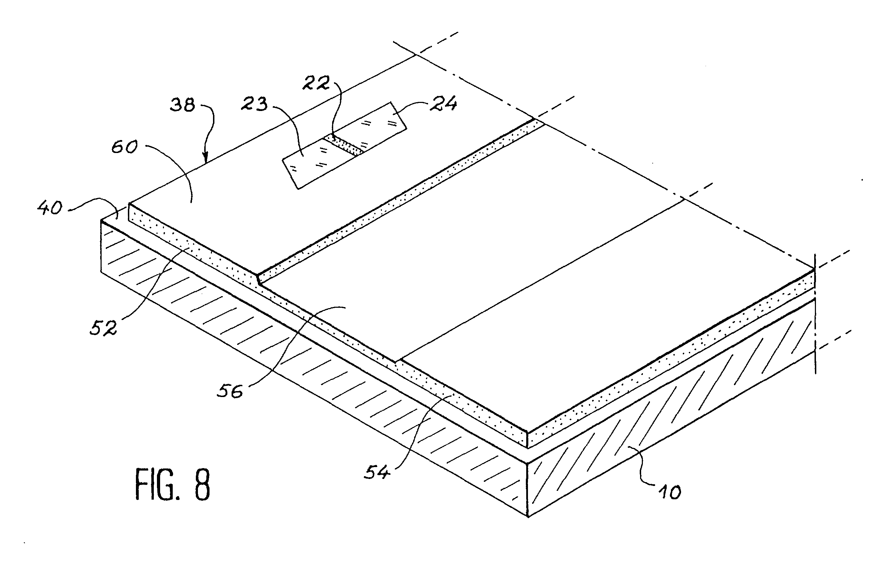

Le patin de vol est obtenu par photolithographie suivie d'une gravure ionique réactive de l'isolant. Sur la figure 8, qui sera décrite plus loin, on verra un patin de vol en forme de catamaran.

Dans l'opération de formation du patin de vol, on effectue une gravure profonde de l'isolant 32 jusqu'à atteindre le substrat à la périphérie du patin. La figure 4 montre cette gravure profonde sous la référence 40. La largeur de cette gravure est supérieure à la largeur du trait de scie qui permettra, en fin de procédé, de séparer les patins les uns des autres. Le futur chemin de découpe des patins est référencé 41 sur la figure 4.

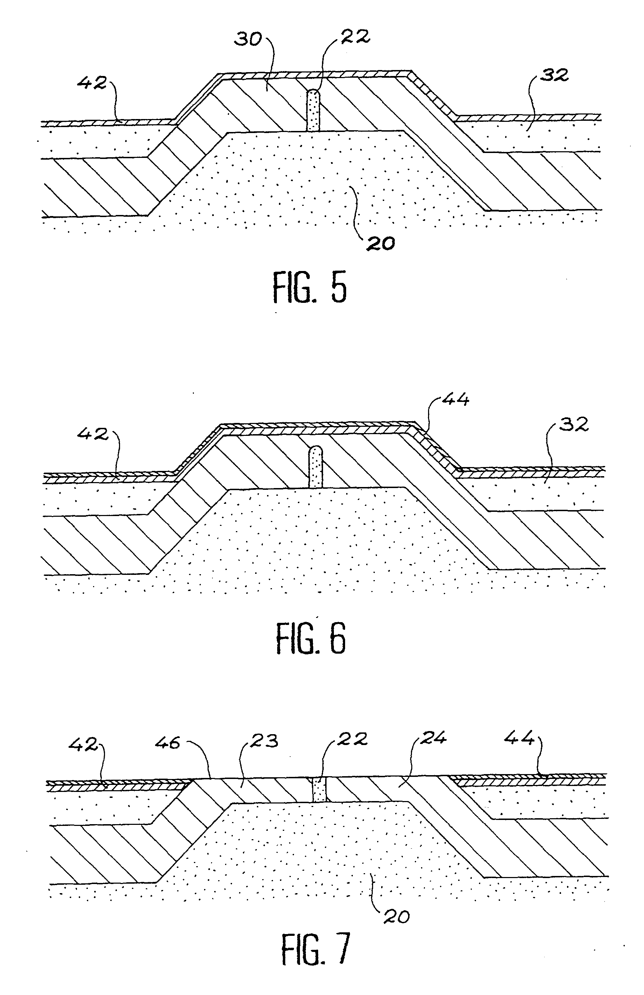

A la suite de cette étape de gravure, on dépose sur l'ensemble de la tête et du patin, une couche mince d'un matériau dur présentant une bonne adhérence. Cette couche est référencée 42 sur la figure 5. Il peut s'agir de tungstène, de chrome ou de titane/tungstène. Ce matériau peut être déposé, par exemple, par pulvérisation cathodique. Son épaisseur peut être de l'ordre de 50 à 500 nm.

Cette couche d'adhérence va venir en contact avec le substrat grâce à la gravure périphérique du patin. Le substrat sera choisi de préférence en matériau conducteur comme le silicium, ou certaines céramiques. La couche d'adhérence, avec les matériaux mentionnés, étant elle-même conductrice, sera donc en contact électrique avec le substrat. Cette couche mince conductrice permettra d'écouler les charges électrostatiques accumulées lors des mouvements relatifs de la couche d'enregistrement par rapport à la tête. Elle constitue donc un blindage électrique.

Sur la couche d'adhérence 42 est ensuite déposée une couche très mince 44 de protection (cf Fig. 6). Cette couche est en matériau dur et de préférence en carbone de type diamant. Son épaisseur peut être par exemple de 10 à 20 nm.

On pratique ensuite une planarisation finale(Fig. 7) en prenant comme surface de référence la couche de protection 44 située de part et d'autre du relief central. La planarisation est suffisamment profonde pour dégager le sommet de l'espaceur 22. La couche magnétique supérieure se trouve alors divisée en deux pièces polaires 23 et 24, lesquelles affleurent au niveau de la couche dure de protection 44. Celle-ci va donc pouvoir jouer son rôle de protection sans éloigner les pièces polaires du support d'enregistrement.

La planarisation finale peut s'effectuer selon n'importe quel procédé connu. Mais elle est d'autant simplifiée que :
- la surface planarisée est très faible par rapport à la surface d'arrêt,
- il ne reste sensiblement que deux matériaux en présence, à savoir le matériau des pièces polaires (en général en fer-nickel) et le matériau de la couche de protection (en général en carbone de type diamant),
- la surface d'arrêt est très dure par rapport au matériau des pièces polaires.

La figure 8 montre, en perspective, la partie arrière d'un patin de vol 38 de type catamaran. Le patin représenté comprend un rail 52 supportant la tête magnétique. Celle-ci affleure sur la surface 60 constituant le plan de vol. De façon plus précise, ce sont les pièces polaires 23, 24 et l'espaceur 22 qui affleurent. Le patin comprend encore un autre rail 54, les deux rails étant séparés par un décrochement 56. On voit également, sur la figure 8, la gravure périphérique 40 mettant à nu le substrat 10. La couche d'adhérence vient prendre appui sur cette surface 40 et par ailleurs recouvre le patin et constitue de ce fait un blindage électrique. La couche dure de protection recouvre l'ensemble et, en particulier, les deux rails 52 et 54. C'est elle qui, finalement, définit le plan de vol 60. Les couches d'adhérence et de protection n'ont pas été représentées sur la figure 8 pour laisser apparaître les autres couches.

## Revendications

1. Procédé de réalisation d'une tête magnétique de type planaire, comprenant les opérations suivantes :
- sur un substrat (10) on dépose une première couche magnétique (12),
- on dépose ensuite une couche isolante (13),
- dans cette couche isolante (13), on forme deux plots magnétiques (14, 15) en contact avec la première couche magnétique (12) et un enroulement conducteur (16),
- on forme un relief isolant (20) au-dessus de la couche isolante (13),
- on réalise une seconde couche magnétique (21) de part et d'autre du relief isolant (20) et en contact avec les plots magnétiques (14, 15),
- sur le sommet du relief isolant (20) on forme un espaceur amagnétique (22),
- on dépose sur le relief central isolant (20) et par dessus l'espaceur amagnétique (22) une couche magnétique supérieure (30),
- on recouvre la couche magnétique supérieure (30) d'une couche isolante (32),
ce procédé étant caractérisé par le fait qu'il se poursuit par les opérations suivantes :
- on planarise la couche magnétique supérieure (30) et la couche isolante (32) sans aller jusqu'à faire affleurer l'espaceur amagnétique (22),
- on grave la couche isolante planarisée (32) jusqu'à abaisser sa surface sous le niveau du sommet de l'espaceur amagnétique (22),
- on dépose une couche de protection (44) en matériau dur sur l'ensemble,
- on planarise la couche magnétique supérieure (30) en prenant comme surface de référence la couche de protection (44) déposée sur la couche isolante planarisée (32), pour mettre les pièces polaires (23, 24) et le sommet de l'espaceur (22) au niveau de la couche de protection (44).

2. Procédé selon la revendication 1, caractérisé par le fait qu'avant de déposer la couche de protection (44) en matériau dur, on dépose une couche d'adhérence (42).

3. Procédé selon la revendication 2, caractérisé par le fait que, après avoir gravé la couche isolante (32) jusqu'à abaisser sa surface sous le niveau du sommet de l'espaceur amagnétique (42) :
- on grave l'ensemble obtenu pour définir un contour et un profil de patin de vol (38) devant contenir la tête,
- on grave la périphérie du patin de vol (38) suffisamment pour dégager une surface de contact (40) sur le substrat conducteur (10) à la périphérie du patin,
- on dépose sur l'ensemble une couche mince d'adhérence et de blindage (42) en un matériau conducteur, cette couche (42) venant en contact avec le substrat (10) à la périphérie du patin,
- on dépose sur cette couche mince d'adhérence et de blindage (42) la couche mince de protection (44) en matériau dur.

4. Procédé selon l'une quelconque des revendications 1 à 3, caractérisé par le fait que la couche mince de protection (44) est en carbone de type diamant.

5. Procédé selon la revendication 4, caractérisé par le fait que la couche mince de protection (44) a une épaisseur comprise entre 10 et 20 nm.

6. Procédé selon l'une quelconque des revendications 2 à 5, caractérisé par le fait que la couche mince d'adhérence et de blindage (42) est en un matériau pris dans le groupe constitué par le tungstène, le chrome et le titane-tungstène.

7. Procédé selon la revendication 6, caractérisé par le fait que la couche mince d'adhérence et de blindage (42) a une épaisseur comprise entre 50 et 500 nm.

8. Procédé selon la revendication 3, caractérisé par le fait qu'il est collectif et porte sur une pluralité de têtes supportées par une pluralité de patins de vol (38) réalisés sur un même substrat (10), et en ce qu'on sépare ces patins de vol (38) en fin de procédé par découpe du substrat (10) le long de chemins de découpe (41), l'opération de gravure destinée à dégager le substrat (10) à la périphérie du patin (40) étant effectuée aux endroits des futurs chemins de découpe (41).

9. Tête magnétique de type planaire obtenue par le procédé de la revendication 1, cette tête comprenant un substrat (10), une première couche magnétique (12), deux plots magnétiques (14, 15), une couche isolante (13) surmontée d'un relief isolant (20), une seconde couche magnétique (21) de part et d'autre du relief isolant (20), un espaceur amagnétique (22) situé sur le relief isolant (20), deux pièces polaires (23, 24) de part et d'autre de l'espaceur amagnétique (22), une couche isolante (32) encadrant les pièces polaires, cette tête étant caractérisée par le fait que la couche isolante (32) encadrant les pièces polaires (23, 24) présente une surface située sous le niveau du sommet de l'espaceur (22), la tête comprenant en outre une couche de protection (44) en matériau dur recouvrant la couche isolante (32), les pièces polaires (23, 24) et le sommet de l'espaceur amagnétique (22) affleurant au niveau de la couche de protection (44) en matériau dur.

10. Tête magnétique selon la revendication 9, caractérisée par le fait qu'elle comprend en outre, entre la couche isolante (32) et la couche de protection (44) en matériau dur, une couche d'adhérence et de blindage (42).

11. Tête magnétique selon la revendication 10, cette tête étant montée montée sur un rail (52) d'un patin de vol (38), caractérisée par le fait que la couche d'adhérence et de blindage (42) recouvre le patin et prend appui sur le substrat à la périphérie (40) du patin (38), et en ce que la couche protectrice (44) en matériau dur recouvre le patin et définit le plan de vol (60) du patin (38), la tête affleurant sur ce plan de vol (60).

12. Tête magnétique selon l'une quelconque des revendications 9 à 11, caractérisée par le fait que la couche mince de protection (44) est en carbone de type diamant.

13. Tête magnétique selon la revendication 12, caractérisée par le fait que la couche mince de protection (44) a une épaisseur comprise entre 10 et 20 nm.

14. Tête magnétique selon l'une quelconque des revendications 10 à 13, caractérisée par le fait que la couche mince d'adhérence (42) est en un matériau pris dans le groupe constitué par le tungstène, le chrome et le titane-tungstène.

15. Tête magnétique selon la revendication 14, caractérisée par le fait que la couche mince d'adhérence (42) a une épaisseur comprise entre 50 et 500 nm.
